# FASCICULE DE BREVET EUROPEEN

(11) **EP 3 406 481 B1**
(45) Date de publication et mention de la délivrance du brevet: **11.11.2020**
(21) Numéro de dépôt: 18165255.3
(22) Date de dépôt: 29.03.2018
(51) Int. Cl.: B60N 2/28, B60N 2/42

(54) **SIÈGE AUTO POUR ENFANT À MOYENS D'INHIBITION SÉLECTIVE DE MOYENS DE PROTECTION ACTIFS**
AUTO-KINDERSITZ MIT MITTELN ZUR SELEKTIVEN AUSSCHALTUNG DER AKTIVEN SCHUTZMITTEL
CHILD'S CAR SEAT WITH MEANS FOR SELECTIVELY INHIBITING ACTIVE PROTECTION MEANS

(30) Priorité: 23.05.2017 FR 1754580
(43) Date de publication de la demande: 28.11.2018
(73) Titulaire: Dorel France, 49309 Cholet Cedex (FR)
(72) Inventeur: GAGNADE, Philippe, 49300 CHOLET (FR); BONDU, Gilles, 49100 ANGERS (FR)
(74) Mandataire: Vidon Brevets & Stratégie

(56) Documents cités:
- WO-A1-2014/064262
- WO-A1-2016/150676
- FR-A1- 2 848 157

## Description

### 1. Domaine de l'invention

Le domaine de l'invention est celui de la puériculture, et plus précisément des sièges destinés à être installés dans un véhicule, ci-après appelés siège auto pour enfant.

Plus précisément encore, l'invention concerne les sièges auto équipés de moyens de protection, ou de sécurité, actifs, et par exemple de coussins gonflables ("airbag"), mis en œuvre, ou activés, dans une situation d'accident.

### 2. Art antérieur

Les sièges auto pour enfant sont conçus pour assurer une protection optimale de l'enfant en cas d'accident, autant que faire se peut et quelque soit le choc subi par le véhicule.

Cette protection est généralement assurée, au moins en partie, par des éléments d'absorption dits passifs (plus précisément "passifs pendant l'accident"). Ces éléments d'absorption peuvent notamment être des éléments réalisés dans des matériaux de type polystyrène expansé (PSE), qui peuvent absorber tout ou partie du choc. Ces éléments d'absorption sont généralement en contact direct ou quasi direct avec une portion du corps de l'enfant (par exemple le dos, les épaules, la tête,...).

En complément, une protection active (plus précisément "active pendant l'accident") peut être mise en œuvre. Ces moyens de protection actifs peuvent notamment être un ou plusieurs coussins gonflables, comme décrits par exemple dans le document de brevet FR2969055 ou WO2014064262, au nom du Titulaire de la présente demande de brevet.

Une difficulté de mise en œuvre de tels moyens actifs est la maîtrise de leur détection de façon efficace. En effet, ces moyens actifs nécessitent une détection de collision, ou de décélération, afin de déclencher suffisamment rapidement les systèmes permettant de protéger l'enfant, lorsque la situation l'exige. Corollairement, il est important qu'un tel déclenchement n'intervienne pas si ceci n'est pas utile.

De tels moyens de déclenchement sont, de façon générale, connus, dans les véhicules automobiles, pour agir sur les systèmes de sécurité adaptés aux adultes installés dans le véhicule (coussins gonflables, ceintures à prétensionneur pyrotechnique, ...). Le véhicule est équipé de nombreux capteurs, et de moyens de traitement puissants, capables de décider de façon efficace si des moyens de sécurité active doivent être déclenchés.

Ces moyens propres au véhicule ne peuvent cependant généralement pas être adaptés directement à un siège auto pour enfant. En effet, un siège auto pour enfant est destiné, par nature, à être installé dans différents types de véhicules. Inversement, un véhicule peut recevoir différents types de siège auto pour enfant. En l'absence d'une norme particulière, il n'est donc pas possible d'exploiter les données relevées et traitées par le véhicule.

En conséquence, le système de détection de collision, de choc ou de décélération, destiné à déclencher les moyens actifs de protection d'un siège auto pour enfant doit être autonome et propre à ce dernier.

Les documents décrivant des systèmes de sécurité active, et notamment des coussins gonflables pour siège auto prévoient généralement la présence de moyens de détection de chocs, pilotant le déclenchement des coussins gonflables, mais n'apportent aucune précision sur le fonctionnement de ces moyens, et notamment sur la façon dont les mesures sont effectuées et exploitées. Il s'agit pourtant d'un problème crucial. En effet, il est essentiel que les moyens actifs se déclenchent systématiquement lorsque ceci est nécessaire, et suffisamment rapidement pour assurer la protection de l'enfant.

Cependant, inversement, il est également important que des déclenchements intempestifs soient évités, autant que faire se peut, tant pour des raisons d'efficacité (un déclenchement intempestif peut surprendre l'enfant) que pour des raisons évidentes de coût (les systèmes actifs sont généralement à usage unique, et ils nécessitent un remplacement du siège, ou au moins des moyens de protection actifs, suite à un déclenchement).

En d'autres termes, il est important d'éviter, autant que faire se peut, de "fausses détections", c'est-à-dire des situations dans lesquelles des moyens de détection génèrent le déclenchement des moyens de protection actifs, alors que ceci n'était pas nécessaire.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir un siège auto assurant un déclenchement fiable, sûr et efficace de moyens de protection actifs, lorsqu'une situation d'accident se produit, tout en évitant un déclenchement intempestif, dans des situations ne justifiant pas un tel déclenchement.

Ainsi, l'invention a pour objectif, selon au moins un mode de réalisation, de fournir un tel siège auto, évitant autant que faire se peut les déclenchements inutiles ou intempestifs, tout en garantissant une protection maximale de l'enfant transporté, en cas de besoin.

### 4. Présentation de l'invention

Pour ceci, l'invention propose un siège auto pour enfant, comprenant un fauteuil monté sur une embase, équipé de moyens de détection d'une situation d'accident, délivrant un signal d'activation en fonction d'une analyse de mesures délivrées par au moins un élément de mesure d'une accélération, pour activer des moyens de protection active de l'enfant.

Selon l'invention, un tel siège comprend des moyens d'inhibition temporaire desdits moyens de détection, empêchant l'émission dudit signal d'activation lorsqu'un réglage de la position d'inclinaison dudit fauteuil par rapport à ladite embase est en cours.

Les inventeurs ont en effet constaté que, dans certaines conditions très particulières, le réglage de l'inclinaison du fauteuil, lorsqu'un enfant est installé dedans, ou non, pouvant nécessiter des forces relativement importantes, ce réglage peut occasionner des déplacements et/ou des chocs qui peuvent être interprétés par les moyens de détection comme une situation d'accident, nécessitant le déclenchement des moyens de protection active, et par exemple de coussins gonflables, ou "airbags". Or ceci n'est bien sûr pas nécessaire, puisque le véhicule est à l'arrêt, et qu'un adulte est présent pour régler le siège.

L'invention prévoit donc, pour éviter ce risque de déclenchement intempestif, d'empêcher tout déclenchement, temporairement, pendant la période de réglage de l'inclinaison, à l'aide de moyens d'inhibition spécifiques.

Dans certains modes de réalisation, lesdits moyens d'inhibition peuvent tenir compte également d'au moins un autre réglage prédéterminé dudit siège auto, notamment une rotation en cours dudit fauteuil par rapport à ladite embase.

Cette rotation peut notamment correspondre à un passage d'une position d'installation, le fauteuil étant orienté face à une portière vers une position de transport, le fauteuil étant orienté dos ou face à la route.

Selon un mode de réalisation particulier, lesdits moyens d'inhibition détectent un déverrouillage d'une poignée ou d'un bouton de libération d'un blocage en inclinaison dudit fauteuil par rapport à ladite embase.

En complément ou en variante, lesdits moyens d'inhibition détectent que ledit fauteuil n'est pas dans une position de transport stable prédéterminée.

Ainsi, les moyens d'inhibition peuvent tenir compte d'une action sur une poignée ou un bouton manipulé par l'utilisateur (l'inhibition correspondant à une position de réglage, par contraste à une position de verrouillage) et/ou de la position du fauteuil (selon qu'il est dans une position stable et verrouillée d'inclinaison ou dans une position intermédiaire, par exemple entre deux positions stables. Dans ce cas, des capteurs peuvent être prévus pour détecter les positions stables).

Dans certains modes de réalisation, lesdits moyens d'inhibition peuvent mettre en œuvre une temporisation de durée prédéterminée, maintenant l'inhibition pendant ladite durée prédéterminée après que la détection d'un réglage en cours est terminée et/ou qu'une poignée ou un bouton de libération d'un blocage dudit fauteuil par rapport à ladite embase a été actionné.

Ladite durée prédéterminée est par exemple comprise entre 1 et 10 secondes.

Ainsi, l'inhibition est maintenue pendant toute la durée du réglage de l'inclinaison, même si la poignée ou le bouton est relâché, par exemple. Une telle temporisation est notamment utile si la détection est effectuée de façon mécanique. Il est possible de s'en affranchir notamment si la détection est électronique.

Selon un mode de réalisation particulier, lesdits moyens d'inhibition comprennent au moins un interrupteur électrique mobile entre une position passante et une position non passante, une desdites positions produisant un signal d'inhibition alimentant lesdits moyens de détection.

On dispose ainsi d'un mécanisme particulièrement simple et sûr. Cet interrupteur peut notamment être contrôlé par la poignée ou le bouton permettant le réglage en inclinaison.

Selon différents modes de réalisation, lesdits moyens de protection active comprennent au moins un des éléments appartenant au groupe comprenant :
- des éléments de sécurité gonflables ;
- des moyens pour bloquer ou augmenter la tension d'une sangle de "top tether ", ou sangle anti-basculement, destinée à solidariser une partie supérieure dudit siège et un point d'ancrage dans ledit véhicule ;
- des moyens pour bloquer ou augmenter la tension des sangles de harnais dudit siège auto, destinées à maintenir un enfant dans ledit siège ;
- des moyens pour bloquer ou augmenter la tension d'une sangle de liaison entre une embase et un fauteuil mobile en rotation par rapport à ladite embase ;
- des moyens de redressement du dossier dudit siège auto ;
- des moyens de déploiement d'une bosse anti-sous-marinage ;
- des moyens pour comprimer le siège enfant sur un fauteuil ou une banquette du véhicule, au niveau des ancrages Isofix® inférieurs;
- des moyens pour modifier l'inclinaison du siège par l'intermédiaire d'une jambe de force.

Il est possible de combiner plusieurs de ces éléments.

Dans un mode de réalisation particulier, lesdits moyens de protection active comprennent au moins deux éléments de sécurité gonflables montés chacun sur une bretelle d'un harnais ou dans un fourreau monté sur une bretelle d'un harnais.

L'invention concerne également un procédé de contrôle de l'activation de moyens de protection active d'un enfant dans un siège auto pour enfant, comprenant un fauteuil monté sur une embase. Un tel procédé comprend notamment les étapes de :
- détection d'une situation d'accident, délivrant un signal d'activation en fonction d'une analyse de mesures délivrées par au moins un élément de mesure d'une accélération, pour activer des moyens de protection active de l'enfant ;
- inhibition temporaire de ladite détection, empêchant l'émission dudit signal d'activation lorsqu'un utilisateur effectue un réglage de l'inclinaison dudit fauteuil par rapport à ladite embase.

Ces étapes ne sont bien sûr pas successives : la première est active en permanence, au moins lorsqu'un enfant est installé dans le fauteuil. La seconde est temporaire, et vient inhiber la première en cas de besoin.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- la figure 1 illustre un exemple de siège auto équipé de coussins gonflables ;
- la figure 2 illustre schématiquement un mode de réalisation des moyens de déclenchement de moyens de protection actifs selon l'invention ;
- la figure 3 illustre schématiquement un mode de réalisation particulier, combinant des moyens mécaniques et des moyens électroniques ;
- les figures 4A et 4B illustrent schématiquement l'inclinaison du fauteuil d'un siège auto ;
- les figures 5A et 5B présentent un exemple de moyens d'inhibition mécaniques pendant le réglage de l'inclinaison des figures 4A et 4B ;
- les figures 6A à 6C illustrent schématiquement la rotation du fauteuil d'un siège auto ;
- les figures 7A et 7B présentent un exemple de moyens d'inhibition mécaniques pendant la rotation des figures 6A à 6C.

### 6. Description de modes de réalisation particuliers

### 6.1 Exemple de siège auto mettant en œuvre l'invention

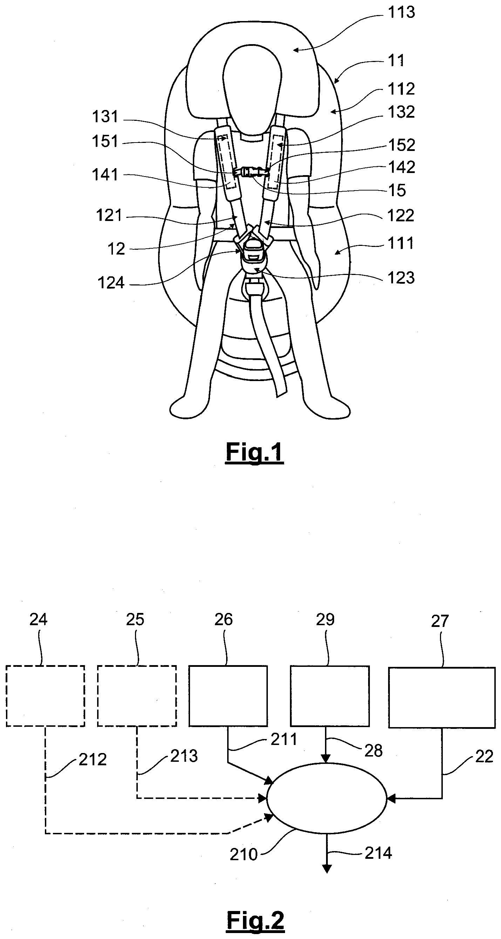

L'invention concerne donc les sièges auto pour enfant, équipés de moyens de protection actifs, et en particulier les moyens correspondants de déclenchement de ces moyens de protection actifs en cas de besoin (choc, accident, décélération supérieure à un seuil prédéterminé, ...). Dans le mode de réalisation illustré, ces moyens de protection actifs comprennent deux coussins gonflables, tels qu'illustrés par la figure 1, et décrits en détail par le document de brevet FR2969055 déjà mentionné.

Ce siège auto comprend un harnais 12 présentant deux bretelles 121, 122 destinées à s'étendre à partir des épaules le long du torse d'un enfant, et portant chacune un élément de sécurité gonflable 141, 142, logé, dans ce mode de réalisation, dans un fourreau 131, 132 monté respectivement sur les bretelles 121, 122, et apte à se gonfler en cas de choc supérieur à un seuil prédéterminé.

Ces éléments de sécurité gonflables 141 et 142 sont par ailleurs reliés par des moyens de solidarisation 15, les solidarisant l'un à l'autre, lorsque l'enfant est installé dans le siège.

Ces éléments de solidarisation 15 comprennent, dans le mode de réalisation illustré, deux portions souples, ou lanières, 151 et 152, équipées chacune d'un élément de boucle respectivement mâle et femelle, pouvant s'insérer l'un dans l'autre pour solidariser les deux lanières 151 et 152, et pouvant être séparées l'un de l'autre, par une action manuelle appropriée (choisie de façon que l'enfant installé ne puisse pas désolidariser lui-même ces moyens de solidarisation).

Selon ce mode de réalisation, les moyens de solidarisation 15 assurent également le maintien dans une position suffisamment rapprochée des deux bretelles 121 et 122, lorsqu'un enfant est installé dans le siège (fonction "chest clip" en anglais). Ceci permet de garantir que les bretelles sont bien placées, et d'éviter que l'enfant passe un bras sous une des bretelles et/ou retire l'une des bretelles alors que le harnais est bouclé.

### 6.2 Moyens de détection et de déclenchement

Ces éléments de sécurité, ou coussins gonflables doivent être gonflés rapidement, en cas d'accident, pour assurer la protection de l'enfant. Il est cependant important d'éviter qu'un déclenchement intempestif des coussins gonflables soit déclenché, en particulier lorsque le siège n'est pas installé convenablement dans le véhicule et/ou qu'aucun enfant n'est présent dans le siège auto.

Pour cela, selon un premier aspect de l'invention, illustré par la figure 2, les moyens de déclenchement, qui sont avantageusement intégralement portés par le siège auto, tiennent compte d'au moins deux informations distinctes :
- au moins un premier signal 211, 212 et/ou 213, indiquant un usage réel et/ou correct du siège dans le véhicule ; et
- au moins un second signal 22, notamment un signal représentatif d'une accélération, délivré par des moyens de détection, comprenant au moins un capteur d'accélération, et indiquant la détection d'une situation d'accident.

La première série de signaux a pour but d'éviter un déclenchement des moyens de protection actifs, même en présence d'un choc ou d'un accident, si ceci n'est pas nécessaire, ou dangereux.

Ainsi, il est souhaitable d'éviter les déclenchements lorsque le siège auto n'est pas installé dans un véhicule (par exemple lors de son transport ou de son stockage). Il n'est également pas souhaitable que les moyens de protection actifs se déclenchent si le siège auto n'est pas installé correctement, et par exemple maintenu par ses pinces Isofix®. Ainsi, un premier capteur 24 de bon verrouillage, ou de bonne installation du siège dans le véhicule (par exemple un capteur associé aux pinces Isofix®) est prévu, pour délivrer une information 212 d'accrochage correct de celles-ci aux anneaux prévus à cet effet dans le véhicule. Il est ainsi à noter que l'équipement produisant le premier signal comprend selon l'invention au moins un capteur de verrouillage du siège auto au véhicule, ce capteur étant de préférence porté par le siège auto.

Selon un mode de réalisation particulier, il est souhaitable que les moyens de protection actifs ne se déclenchent pas, même si le siège auto est correctement installé dans le véhicule, si celui-ci ne transporte pas d'enfant.

Selon une première approche, cette détection peut être assurée par des moyens de contrôle 25 du verrouillage du harnais de l'enfant dans le siège auto, et par exemple du bouclage correct du clip de thorax, reliant les deux bretelles du harnais. Cette approche est notamment intéressante dans le cas du siège de la figure 1, puisque ce clip doit également être verrouillé pour assurer un déploiement correct des coussins gonflables.

D'autres capteurs de présence de l'enfant 26 peuvent être prévus, en alternative ou en complément, par exemple à l'aide d'un capteur de poids intégré à l'assise du siège auto.

Selon l'invention, le déclenchement des moyens de protection est inhibé. Schématiquement, comme illustré sur la figure 2, pour que le déclenchement soit possible, il faut donc, outre l'ensemble de conditions préalables de bonne installation du siège et/ou de présence de l'enfant, qu'une information d'inhibition 28 ne soit pas reçue de moyens de détection 29, comprenant au moins un capteur de détection d'un réglage en cours de l'inclinaison et/ou de la rotation (et/ou, inversement, qu'une information de non-inhibition soit reçue).

Des exemples de mise en œuvre sont décrits plus en détail par la suite.

Il convient ensuite de détecter de façon efficace une situation d'accident. Ceci est assuré par une détection 27 de dépassement d'un ou plusieurs seuils de décélération prédéterminés, délivrant des premiers signaux de détection 22 à des moyens de détection (traitement et/ou décision) 210, émettant en cas de besoin un signal 214 d'activation des moyens de protection active.

Selon une première approche, ces moyens de détection 210 peuvent être purement mécaniques. Cette approche présente l'avantage de ne pas nécessiter d'alimentation électrique, ce qui permet de simplifier la réalisation du siège auto, et d'éviter les risques dus à la nécessité d'un fonctionnement en autonomie (qui suppose la mise en œuvre de batteries autonomes, et le contrôle de la charge suffisante de cette dernière, pour générer une alerte dans le cas contraire).

Un tel système mécanique peut notamment mettre en œuvre un ressort taré, associé à une masselotte mobile, formant un capteur inertiel. Lorsque la masselotte se déplace au-delà d'un seuil choisi, la tension du ressort dépasse également un seuil correspondant, et un signal de détection 22 est généré.

Selon une deuxième approche, il est possible d'utiliser des moyens électroniques de détection 210, mettant en œuvre un ou plusieurs accéléromètres. Cette approche permet d'effectuer une détection plus précise, et en conséquence de disposer d'un seuil de déclenchement programmable, en fonction de divers paramètres. En conséquence, on peut ainsi réduire le risque de déclenchement intempestif.

En revanche, ce système doit être en veille en permanence, ce qui suppose une alimentation en énergie électrique suffisante pour que le siège puisse être utilisé pendant plusieurs mois, jour/année.

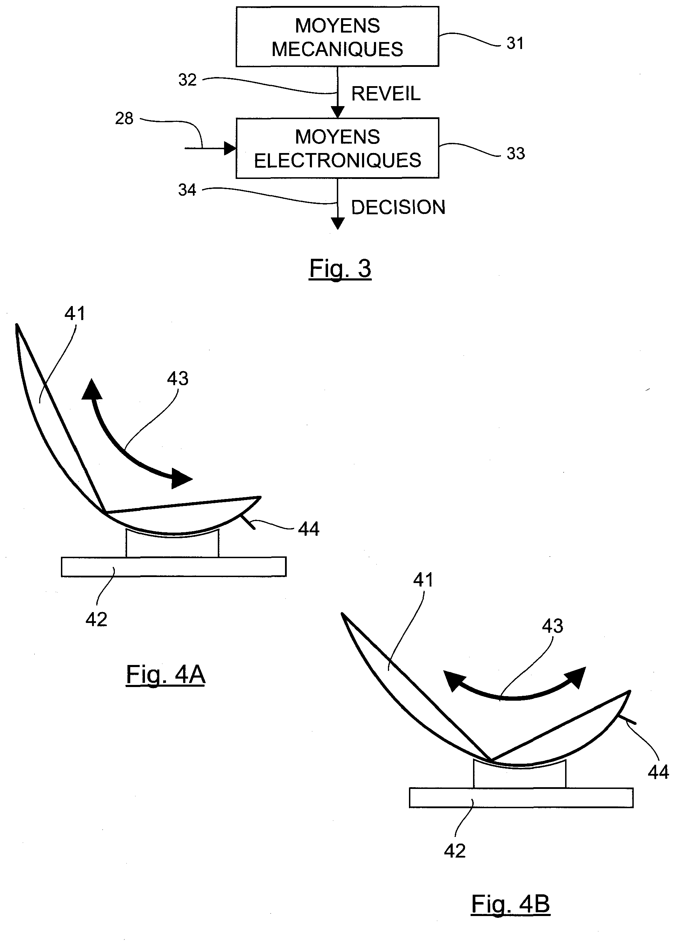

Selon un troisième mode de réalisation, illustré par la figure 3, on prévoit de combiner les deux approches décrites ci-dessus, en confiant aux moyens mécaniques 31 une fonction de réveil 32, ou d'activation, des moyens électroniques 33 en cas de situation d'accident potentiel. Dès qu'ils sont activés, les moyens électroniques effectuent une analyse plus poussée, et plus précise, de la situation, pour décider si la situation d'accident potentiel est ou non une situation d'accident réel, nécessitant le déclenchement 34 des moyens de protection active.

Dans ce cas, l'information d'inhibition 28 peut alimenter les moyens électroniques 33.

### 6.3 Exemples de moyens d'inhibition

Les figures 4A et 4B illustrent schématiquement un siège auto, respectivement dans une position redressée (l'enfant est dans une position assise) et dans une position inclinée (l'enfant est dans une position sensiblement allongée). Pour ceci, le fauteuil 41 est mobile en inclinaison (mouvement de rotation et/ou de translation) par rapport à l'embase 42.

Le fauteuil 41 et l'embase 42 sont ici représentés de façon schématique, et les moyens de guidage du mouvement relatif illustré par la flèche 43 ne sont pas détaillés, non plus que les moyens de verrouillage dans une position d'inclinaison prédéterminée (classiquement, entre les deux positions illustrées par les figures 4A et 4B, des positions intermédiaires peuvent être prévues).

Il existe de nombreux moyens connus pour mettre en œuvre cette inclinaison, par exemple via des glissières formées dans l'embase, qui ne sont pas décrits ici plus en détail.

Des moyens de blocage ou de verrouillage maintiennent le fauteuil dans la position d'inclinaison sélectionnée, par exemple à l'aide d'un mécanisme mettant en œuvre une crémaillère solidaire de l'embase et dont chaque logement (creux de dent) correspond à une position d'inclinaison, un pion ou tige solidaire du fauteuil venant se loger dans l'un des logements pour maintenir en position stable le fauteuil, et étant extrait de ce logement pour permettre un réglage de l'inclinaison. De nombreux autres moyens de verrouillage / déverrouillage sont connus et peuvent être utilisés.

Pour permettre ce réglage, une poignée 44, ou plus généralement un actionneur adapté (bouton...) est prévue, par exemple en partie inférieure de l'assise du fauteuil, comme illustré schématiquement en figures 4A et 4B. Par défaut (position de repos), cette poignée est dans une position de verrouillage, le fauteuil étant bloqué en inclinaison par rapport à l'assise. Pour modifier l'inclinaison, l'utilisateur agit sur cette poignée pour déverrouiller le mécanisme (par exemple pour sortir la tige de verrouillage d'une des dents de la crémaillère) et peut déplacer le fauteuil (flèche 43).

De préférence, des moyens de rappel sont prévus, de façon que la poignée, et le mécanisme de verrouillage qu'elle contrôle, reprennent une position verrouillée dès que la poignée est relâchée.

Le déplacement du fauteuil par rapport à l'embase peut, dans certains cas, provoquer des chocs relativement importants, notamment lorsque le fauteuil arrive trop brusquement en butée (position la plus redressée en particulier), qui peuvent être interprétés faussement comme une situation d'accident par les moyens de traitement 210, et entrainer en conséquence un déclenchement intempestif des coussins gonflables.

Pour éviter cette situation, l'invention prévoit une inhibition des moyens de déclenchement, lorsque l'on effectue un réglage de l'inclinaison. Notamment, on peut détecter que la poignée 44 est dans une position déverrouillée, et donc que l'inclinaison est en cours de modification. Dans cette situation, même en présence de choc important, le déclenchement n'aura pas lieu.

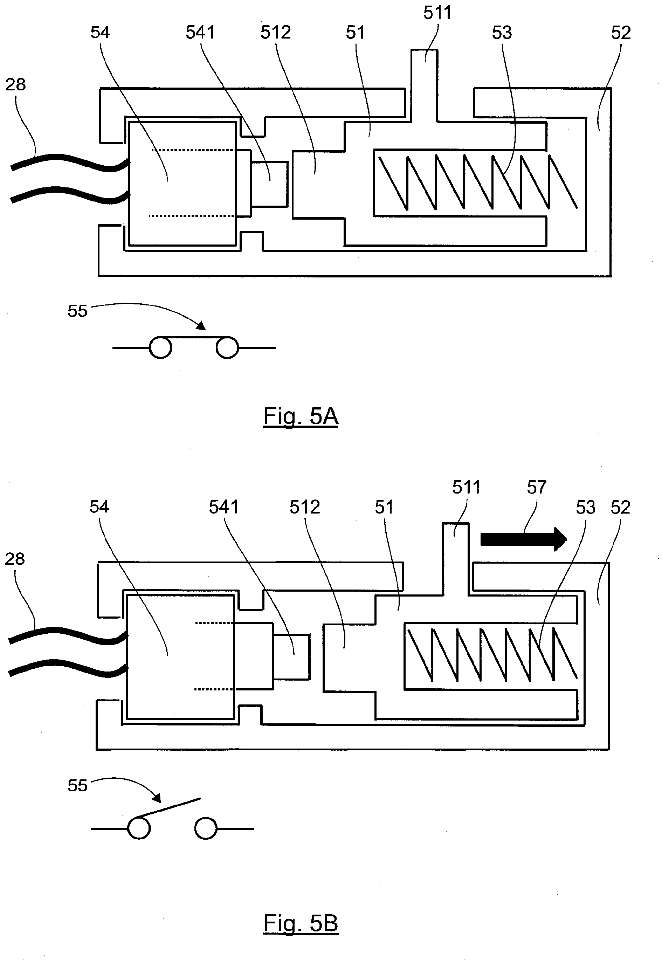

Un exemple de mise en œuvre de cette approche est illustré par les figures 5A et 5B.

La poignée 51 est montée mobile dans un boîtier support 52, entre une position de repos (verrouillée ; figure 5A) et une position de réglage de l'inclinaison (déverrouillée ; figure 5B). Un ressort de rappel 53 tend à ramener la poignée dans la position de repos, en l'absence d'autre sollicitation.

Pour pouvoir régler l'inclinaison, l'utilisateur agit sur une partie de préhension 511 de la poignée, pour la déplacer en translation (flèche 57; figure 5B). D'autres types de déplacements ou d'action (rotation, appui,...) sont bien sûr envisageables.

Un interrupteur, ou contacteur, 54 délivre aux moyens de détection 210 l'information 28 d'inhibition (et/ou de non-inhibition). Dans le mode de réalisation illustré, le contacteur 54 est fermé (55) et délivre un signal électrique, correspondant par exemple à un « 1 » logique, signifiant, pour les moyens de détection 210, une absence d'inhibition.

Pour ceci, une partie de commande 512 de la poignée 51 agit sur la partie mobile 541 du contacteur, sous l'effet du ressort 53.

Lorsque la poignée 51 est déplacée pour pouvoir régler l'inclinaison (figure 5B), la partie de commande 512 de la poignée est éloignée de la partie mobile 541 du contacteur. Le circuit électrique est alors ouvert (56), correspondant par exemple à un « 0 » logique (absence de signal électrique), et les moyens de détection 210 sont informés d'une action en cours de réglage de l'inclinaison, et en conséquence sont inhibés.

L'inhibition cesse, selon les modes de réalisation, dès que la poignée 51 est relâchée (retour à la position de la figure 5A) ou après une temporisation, qui peut par exemple être comprise entre une et dix secondes. Cette temporisation peut notamment représenter un temps alloué au réglage de l'inclinaison, notamment dans un cas où la poignée peut être relâchée sans que le fauteuil soit encore replacé dans une position d'inclinaison stable.

En variante, ou en complément, des capteurs peuvent être prévus pour repérer chaque position stable, par exemple sous la forme de contacteurs placés au fond des dents de la crémaillère. Dans ce cas, une information d'inhibition est émise, tant qu'aucun capteur n'indique que le fauteuil est dans une position d'inclinaison stable. Ainsi, l'utilisateur peut régler l'inclinaison librement, et les éventuels chocs ou accélérations correspondant à ce réglage ne risquent pas de déclencher intempestivement les coussins gonflables.

La même approche peut également être appliquée à la rotation du siège par rapport à son embase.

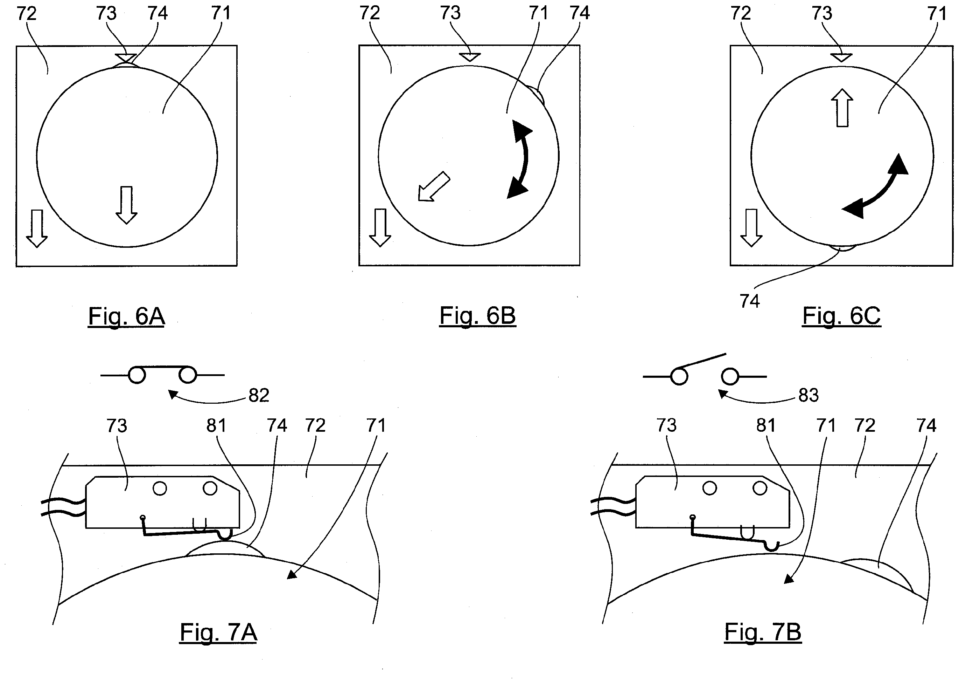

Comme illustré schématiquement par les figures 6A à 6C, il est possible, dans certains sièges autos, de déplacer en rotation le fauteuil 71 par rapport à son embase 72, par exemple pour prendre l'une des deux positions stables illustrées par les figures 6A et 6C, le fauteuil étant respectivement face à la route ou dos à la route.

Dans le mode de réalisation illustré, seule la position stable face à la route (figure 6A) est adaptée à un éventuel déclenchement des coussins gonflables. Ceux-ci ne doivent pas pouvoir être déclenchés, de même que lorsque le siège est en réglage de l'inclinaison, dans la position dos à la route (figure 6C) ni dans les positions intermédiaires, illustrées par la figure 6B, correspondant soit à un changement de position face à la route ou dos à la route, soit à une position intermédiaire d'installation de l'enfant,

Selon un mode de réalisation, la détection de la position face à la route peut être assurée par un contacteur 73 montée sur l'embase 72, coopérant avec une protubérance 74 prévue à cet effet sur le fauteuil 71.

Lorsqu'il est dans la position face à la route, et que les coussins gonflables peuvent être déclenchés si nécessaire, la protubérance 74 coopère avec le contacteur 73, alors que dans les autres positions, intermédiaires (figure 6B) ou dos à la route (figure 6C) cette coopération n'existe pas.

On note ici qu'il est prévu que les coussins gonflables ne puissent pas être déclenchés, par la position dos à la route. Dans certaines variantes, il est bien sûr possible de prévoir que ceci peut être le cas, ou que d'autres moyens de protection active puissent être déclenchés. Dans ce cas, une seconde protubérance pourra être ajoutée. Si des traitements sélectifs doivent être mis en œuvre selon que le fauteuil se trouve dos à la route ou face à la route, on pourra utiliser deux contacteurs distincts et deux protubérances distinctes.

Les figures 7A et 7B illustrent plus précisément un mode de réalisation de ce fonctionnement. Dans la position de la figure 6A, correspondant à la figure 7A, la protubérance 74 repousse l'élément de contact 81 du contacteur 73, qui est alors dans une position fermée (82). Le circuit électrique est donc passant, et les éléments de détection peuvent, si nécessaire, déclencher les coussins gonflables.

Dans le cas de la figure 7B, en revanche, la protubérance 74 ne coopère plus avec l'élément de contact 81. Le contacteur 73 passe alors dans un état ouvert (83).

A nouveau, bien sûr d'autres moyens de détection de la position du fauteuil peuvent être mis en œuvre, notamment en contrôlant la position d'un bouton de déverrouillage.

### 6.4 Variantes de moyens de protection active

Bien que le mode de réalisation décrit en relation avec la figure 1 présente le déclenchement de coussins gonflables, l'approche de l'invention peut bien sûr être mise en œ uvre, en complément ou en alternative, pour assurer le déclenchement d'autres types de moyens de protection actifs, tels que :
- des moyens pour bloquer ou augmenter la tension d'une sangle de "top tether", ou sangle anti-basculement, destinée à solidariser la partie supérieure dudit siège et un point d'ancrage dans le véhicule ;
- des moyens pour bloquer ou augmenter la tension des sangles de harnais dudit siège auto, destinées à maintenir un enfant dans le siège ;
- des moyens pour bloquer ou augmenter la tension d'une sangle de liaison entre une embase et un fauteuil mobile en rotation par rapport à l'embase ;
- des moyens de redressement du dossier du siège auto ;
- des moyens de déploiement d'une bosse anti-sous-marinage ;
- des moyens pour comprimer le siège enfant sur une banquette du véhicule au niveau des ancrages Isofix® inférieurs ;
- des moyens pour modifier l'inclinaison du siège par l'intermédiaire d'une jambe de force.

## Revendications

1. Siège auto pour enfant, comprenant un fauteuil (41) monté sur une embase (42), équipé de moyens (27, 210) de détection d'une situation d'accident, délivrant un signal d'activation (214, 34) en fonction d'une analyse de mesures délivrées par au moins un élément de mesure d'une accélération, pour activer des moyens (141, 142) de protection active de l'enfant,
**caractérisé en ce qu'**il comprend des moyens (29) d'inhibition temporaire desdits moyens (210) de détection, empêchant l'émission dudit signal d'activation (214, 34) lorsqu'un réglage (43) de la position d'inclinaison dudit fauteuil (41) par rapport à ladite embase (42) est en cours.

2. Siège auto pour enfant selon la revendication 1, **caractérisé en ce que** lesdits moyens d'inhibition (29) tiennent compte également d'au moins un autre réglage prédéterminé dudit siège auto, notamment une rotation en cours dudit fauteuil (71) par rapport à ladite embase (72).

3. Siège auto pour enfant selon l'une quelconque des revendications 1 et 2, **caractérisé en ce que** lesdits moyens d'inhibition (29) détectent un déverrouillage d'une poignée ou d'un bouton de libération (44, 51) d'un blocage en inclinaison dudit fauteuil (41) par rapport à ladite embase (42).

4. Siège auto pour enfant selon l'une quelconque des revendications 1 à 3, **caractérisé en ce que** lesdits moyens (29) d'inhibition détectent que ledit fauteuil (41) n'est pas dans une position de transport stable prédéterminée.

5. Siège auto pour enfant selon l'une quelconque des revendications 1 à 4, **caractérisé en ce que** lesdits moyens (29) d'inhibition mettent en œuvre une temporisation de durée prédéterminée, maintenant l'inhibition (28) pendant ladite durée prédéterminée après que la détection d'un réglage en cours est terminée et/ou qu'une poignée ou un bouton de libération (44, 51) d'un blocage dudit fauteuil par rapport à ladite embase a été actionné.

6. Siège auto pour enfant selon la revendication 5, **caractérisé en ce que** ladite durée prédéterminée est comprise entre 1 et 10 secondes.

7. Siège auto pour enfant selon l'une quelconque des revendications 1 à 6, **caractérisé en ce que** lesdits moyens d'inhibition (29) comprennent au moins un interrupteur électrique (54) mobile entre une position passante (55) et une position non passante (56), une desdites positions produisant un signal d'inhibition (28) alimentant lesdits moyens de détection (210, 33).

8. Siège auto pour enfant selon l'une quelconque des revendications 1 à 7, **caractérisé en ce que** lesdits moyens de protection active comprennent au moins un des éléments appartenant au groupe comprenant :
- des éléments de sécurité gonflables (141, 142) ;
- des moyens pour bloquer ou augmenter la tension d'une sangle de "top tether", ou sangle anti-basculement, destinée à solidariser une partie supérieure dudit siège et un point d'ancrage dans ledit véhicule ;
- des moyens pour bloquer ou augmenter la tension des sangles de harnais dudit siège auto, destinées à maintenir un enfant dans ledit siège ;
- des moyens pour bloquer ou augmenter la tension d'une sangle de liaison entre une embase et un fauteuil mobile en rotation par rapport à ladite embase ;
- des moyens de redressement du dossier dudit siège auto;
- des moyens de déploiement d'une bosse anti-sous-marinage ;
- des moyens pour comprimer le siège enfant sur un fauteuil ou une banquette du véhicule, au niveau des ancrages Isofix® inférieurs;
- des moyens pour modifier l'inclinaison du siège par l'intermédiaire d'une jambe de force.

9. Siège auto pour enfant selon l'une quelconque des revendications 1 à 8, **caractérisé en ce que** lesdits moyens de protection active comprennent au moins deux éléments de sécurité gonflables (141, 142) montés chacun sur une bretelle (121, 122) d'un harnais ou dans un fourreau (131, 132) monté sur une bretelle d'un harnais.

10. Procédé de contrôle de l'activation de moyens de protection active d'un enfant dans un siège auto pour enfant, comprenant un fauteuil monté sur une embase, **caractérisé en ce qu'**il comprend les étapes de :
- détection d'une situation d'accident, délivrant un signal d'activation (214, 34) en fonction d'une analyse (210) de mesures délivrées par au moins un élément de mesure (27) d'une accélération (22), pour activer des moyens de protection active de l'enfant ;
- inhibition temporaire (28) de ladite détection, empêchant l'émission dudit signal d'activation (214) lorsqu'un utilisateur effectue un réglage de l'inclinaison dudit fauteuil par rapport à ladite embase.

## Patentansprüche

1. Auto-Kindersitz, umfassend einen Lehnensitz (41), der auf einer Grundplatte (42) montiert ist, ausgestattet mit Mitteln (27, 210) zur Erfassung einer Unfallsituation, die auf der Grundlage einer Analyse von Messungen, die von mindestens einem Element zur Messung einer Beschleunigung geliefert werden, ein Aktivierungssignal (214, 34) ausgeben, um Mittel (141, 142) zum aktiven Schutz des Kindes zu aktivieren,
**dadurch gekennzeichnet, dass** er Mittel (29) zur vorübergehenden Ausschaltung der Erfassungsmittel (210) umfasst, die die Aussendung des Aktivierungssignals (214, 34) verhindern, wenn eine Einstellung (43) der Neigungsposition des Lehnensitzes (41) in Bezug auf die Grundplatte (42) ausgeführt wird.

2. Auto-Kindersitz nach Anspruch 1, **dadurch gekennzeichnet, dass** die Ausschaltungsmittel (29) ebenfalls mindestens eine weitere vorbestimmte Einstellung des Autositzes berücksichtigen, insbesondere eine in Ausführung befindliche Drehung des Lehnensitzes (71) in Bezug auf die Grundplatte (72).

3. Auto-Kindersitz nach einem der Ansprüche 1 und 2, **dadurch gekennzeichnet, dass** die Ausschaltungsmittel (29) eine Entriegelung eines Griffes oder eines Knopfes zum Auslösen (44, 51) einer Blockierung in der Neigung des Lehnensitzes (41) in Bezug auf die Grundplatte (42) erfassen.

4. Auto-Kindersitz nach einem der Ansprüche 1 bis 3, **dadurch gekennzeichnet, dass** die Ausschaltungsmittel (29) erfassen, dass sich der Lehnensitz (41) nicht in einer vorbestimmten stabilen Transportsituation befindet.

5. Auto-Kindersitz nach einem der Ansprüche 1 bis 4, **dadurch gekennzeichnet, dass** die Ausschaltungsmittel (29) eine vorbestimmte Verzögerungszeit ausführen, wobei die Ausschaltung (28) während der vorbestimmten Dauer beibehalten wird, nachdem die Erfassung einer in Ausführung befindlichen Einstellung beendet wurde und/oder ein Griff oder ein Knopf zum Auslösen (44, 51) einer Blockierung des Lehnensitzes in Bezug auf die Grundplatte betätigt wurde.

6. Auto-Kindersitz nach Anspruch 5, **dadurch gekennzeichnet, dass** die vorbestimmte Dauer zwischen 1 und 10 Sekunden liegt.

7. Auto-Kindersitz nach einem der Ansprüche 1 bis 6, **dadurch gekennzeichnet, dass** die Ausschaltungsmittel (29) mindestens einen elektrischen Schalter (54) umfassen, der zwischen einer Durchlassposition (55) und einer Sperrposition (56) beweglich ist, wobei eine der Positionen ein Ausschaltungssignal erzeugt (28), das die Erfassungsmittel (210, 33) versorgt.

8. Auto-Kindersitz nach einem der Ansprüche 1 bis 7, **dadurch gekennzeichnet, dass** die Mittel zum aktiven Schutz mindestens eines der Elemente umfassen, die zur Gruppe gehören, die umfasst:
- aufblasbare Sicherheitselemente (141, 142);
- Mittel zum Blockieren oder Erhöhen der Spannung eines "Top-Tether"-Gurtes oder Antikipp-Gurtes, der dazu bestimmt ist, einen oberen Teil des Sitzes und einen Befestigungspunkt in dem Fahrzeug miteinander zu verbinden;
- Mittel zum Blockieren oder Erhöhen der Spannung der Gurte des Gurtgeschirrs des Autositzes, die dazu bestimmt sind, ein Kind in dem Sitz zu halten;
- Mittel zum Blockieren oder Erhöhen der Spannung eines Verbindungsgurtes zwischen einer Grundplatte und einem beweglichen Lehnensitz, der in Bezug auf die Grundplatte beweglich ist;
- Mittel zur Aufrichtung der Rückenlehne des Autositzes;
- Mittel zur Errichtung eines Anti-Submarining-Höckers;
- Mittel zum Komprimieren des Kindersitzes auf einem Lehnensitz oder einer Sitzbank des Fahrzeugs in Höhe der unteren Isofix®-Befestigungen;
- Mittel zum Verstellen der Neigung des Sitzes mit Hilfe eines Federbeins.

9. Auto-Kindersitz nach einem der Ansprüche 1 bis 8, **dadurch gekennzeichnet, dass** die Mittel zum aktiven Schutz mindestens zwei aufblasbare Sicherheitselemente (141, 142) umfassen, die jedes auf einem Schulterriemen (121, 122) eines Gurtgeschirrs oder in einer auf einem Schulterriemen eines Gurtgeschirrs montierten Ummantelung (131, 132) angebracht sind.

10. Verfahren zur Steuerung der Aktivierung von Mitteln zum aktiven Schutz eines Kindes in einem Auto-Kindersitz, der einen auf einer Grundplatte montierten Lehnensitz umfasst, **dadurch gekennzeichnet, dass** es die folgenden Schritte umfasst:
- Erfassung einer Unfallsituation, wobei auf der Grundlage einer Analyse (210) von Messungen, die von mindestens einem Element zur Messung (27) einer Beschleunigung (22) geliefert werden, ein Aktivierungssignal (214, 34) ausgegeben wird, um Mittel zum aktiven Schutz des Kindes zu aktivieren;
- vorübergehende Ausschaltung (28) der Erfassung, wobei die Aussendung des Aktivierungssignals (214) verhindert wird, wenn ein Nutzer eine Einstellung der Neigung des Lehnensitzes in Bezug auf die Grundplatte vornimmt.

## Claims

1. Child car seat, comprising a chair (41) assembled on a base (42), fitted with means (27, 210) for detecting an accident situation, delivering an activation signal (214, 34) according to an analysis of measurements delivered by at least one element for measuring an acceleration, to activate active protection means (141, 142) of the child,
**characterised in that** it comprises means (29) for temporarily inhibiting said detection means (210), preventing the emission of said activation signal (214, 34) when an adjustment (43) of the tilt position of said chair (41) in relation to said base (42) is ongoing.

2. Child car seat according to claim 1, **characterised in that** said inhibition means (29) also consider at least one other predetermined adjustment of said car seat, in particular, an ongoing rotation of said chair (71) in relation to said base (72).

3. Child car seat according to any one of claims 1 and 2, **characterised in that** said inhibition means (29) detect an unlocking of a handle or a release button (44, 51) of a tilt lock of said chair (41) in relation to said base (42).

4. Child car seat according to any one of claims 1 to 3, **characterised in that** said inhibition means (29) detect that said chair (41) is not in a predetermined stable transportation position.

5. Child car seat according to any one of claims 1 to 4, **characterised in that** said inhibition means (29) implement a predetermined duration timeout, maintaining the inhibition (28) for said predetermined duration after the detection of an ongoing adjustment has ended and/or that a handle or a release button (44, 51) of a tilt lock of said chair in relation to said base has been actuated.

6. Child car seat according to claim 5, **characterised in that** said predetermined duration is between 1 and 10 seconds.

7. Child car seat according to any one of claims 1 to 6, **characterised in that** said inhibition means (29) comprise at least one electric switch (54) mobile between a passing position (55) and a non-passing position (56), one of said positions producing an inhibition signal (28) providing said detection means (210, 33).

8. Child car seat according to any one of claims 1 to 7, **characterised in that** said active protection means comprise at least one of the elements belonging to the group comprising:
- inflatable safety elements (141, 142);
- means to lock or increase the tension of a "top tether" strap, or anti-tilt strap, intended to secure an upper part of said seat and an anchoring point in said vehicle;
- means to lock or increase the tension of the harness straps of said car seat, intended to keep a child in said seat;
- means to lock or increase the tension of a connecting strap between a base and a mobile chair, rotating in relation to said base;
- means for straightening the backrest of said car seat;
- means for deploying an anti-submarining system;
- means for compressing the child seat on a chair or a vehicle backseat, at the level of lower Isofix® anchorages;
- means for modifying the tilt of the seat through the intermediary of a load strut.

9. Child car seat according to any one of claims 1 to 8, **characterised in that** said active protection means comprise at least two inflatable safety elements (141, 142) each assembled on a strap (121, 122) of a harness or in a sheath (131, 132) assembled on a strap of a harness.

10. Method for controlling the activation of active protection means of a child in a child car seat, comprising a chair assembled on a base, **characterised in that** it comprises steps of:
- detecting an accident situation, delivering an activation signal (214, 34) according to an analysis (210) of measurements delivered by at least one element for measuring (27) an acceleration (22), to activate the active protection means of the child;
- temporarily inhibiting (28) said detection, preventing the emission of said activation signal (214) when a user makes an adjustment of the tilt of said chair in relation to said base.
